# EUROPÄISCHE PATENTANMELDUNG

(11) **EP 0 535 443 A1**
(43) Veröffentlichungstag der Anmeldung: **07.04.1993**
(21) Anmeldenummer: 92115793.9
(22) Anmeldetag: 16.09.1992
(51) Int. Cl.: D06F 37/20, F16F 7/08

(54) **Reibungsdämpfer für Waschmaschinen**

(30) Priorität: 02.10.1991 DE 4132815
(71) Anmelder: SUSPA COMPART Aktiengesellschaft, D-90518 Altdorf (DE)
(72) Erfinder: Bauer, Hans Jürgen, W-8503 Altdorf (DE)
(74) Vertreter: Rau, Manfred, Dr. Dipl.-Ing.

(57) **Zusammenfassung**

Ein Reibungsdämpfer für Waschmaschinen weist einen Haltebügel (12), ein Reib-Rohr (10) und eine letzteres aufnehmende Reibungsbüchse (11) auf. Die Reibungsbüchse (11) ist einstückig ausgebildet und weist eine Umfangsnut (19) auf, in der ein Reibbelag (20) aus geschäumtem nachgiebigem zelligem Reibungsmaterial angeordnet ist.

## Beschreibung

Die Erfindung betrifft einen Reibungsdämpfer nach dem Oberbegriff des Anspruches 1.

Ein derartiger durch offenkundige Vorbenutzung zum Stand der Technik gehörender Reibungsdämpfer weist ein starr am Laugenbehälter des Waschaggregates angebrachtes Reib-Rohr auf, das von zwei Reibköpfen umgriffen wird, die von einem als Spannbügel aus Federstahl ausgebildeten Haltebügel gegeneinander und damit gegen das Reib-Rohr gepreßt werden. Nachteilig hieran ist die schwierige Montage und außerdem die Tatsache, daß der Haltebügel aus Federstahl od.dgl. bestehen muß.

Aus der EP 0 228 518 B1 ist ein ähnlicher Reibungsdämpfer bekannt, bei dem anstelle eines Reib-Rohres eine Reibungsplatte vorgesehen ist, gegen die die beiden Reibungsköpfe angedrückt werden.

Aus der EP 0 336 176 A2 ist ein Reibungsdämpfer für Waschmaschinen bekannt, bei dem ein Reib-Rohr am Waschaggregat um eine zur Trommel-Achse parallele Schwenkachse anlenkbar ist. Ein weiteres, das Reib-Rohr teleskopartig aufnehmendes Rohr ist um eine ebenfalls zur Trommel-Achse parallele Schwenkachse an der Bodenplatte der Waschmaschine anlenkbar. In dem äußeren, das Reib-Rohr aufnehmenden Rohr ist ein Einsatz angebracht, der einen das Reib-Rohr umschließenden Reibbelag aufnimmt. Der Reibbelag besteht aus geschäumtem zelligem Polyurethan, in dessen Oberfläche Schmierfett zur Erzeugung einer geschmierten Reibung angebracht ist.

Der Erfindung liegt die Aufgabe zugrunde, einen Reibungsdämpfer der gattungsgemäßen Art so weiterzubilden, daß er konstruktiv einfach aufgebaut und leicht zu montieren ist.

Diese Aufgabe wird erfindungsgemäß durch die Merkmale im Kennzeichnungsteil des Anspruches 1 gelöst. Dadurch daß die Reibungsbüchse geschlossen ausgebildet ist, hat der Reibbelag eine genau definierte Lage, wodurch genau definierte Reibungsverhältnisse erreicht werden. Aufgrund dieser geschlossenen Ausgestaltung ist nicht notwendig, daß der Haltebügel aus Federstahl oder ähnlichem Material besteht; er kann vielmehr aus besonders einfachem und damit kostengünstigem Werkstoff bestehen. Durch die Weiterbildung nach den Ansprüchen 2 und 3 wird eine besonders einfache Montage erzielt, die in der weiteren Ausgestaltung nach den Ansprüchen 4 und 5 zu einer exakten Führung des Reib-Rohres in der Reibungsbüchse führt, wodurch wiederum auch genau definierte Reibungsverhältnisse auf Dauer eingehalten werden. Anspruch 6 gibt ein besonders bevorzugtes Material für den Reibbelag wider, das für diesen Einsatzzweck bekannt ist.

Die erfindungsgemäße Ausgestaltung führt dazu, daß der Reibungsdämpfer besonders vielfältig eingesetzt werden kann, was insbesondere in den Ansprüchen 7 und 8 niedergelegt ist. In diesem Zusammenhang kann insbesondere auch die vorteilhafte Ausgestaltung nach Anspruch 9 vorgesehen werden, die zu einer weiteren erheblichen Kosteneinsparung führt. Die Ausgestaltung nach Anspruch 10 führt in diesem Zusammenhang zu einer besonders einfachen Montage.

Weitere Merkmale, Vorteile und Einzelheiten der Erfindung ergeben sich aus der nachfolgenden Beschreibung von drei Ausführungsbeispielen anhand der Zeichnung. Es zeigt
- Fig. 1: eine Stirnansicht einer Trommelwaschmaschine in schematischer Darstellung,
- Fig. 2: einen Reibungsdämpfer nach der Erfindung in einer Seitenansicht entsprechend dem Sichtpfeil II in Fig. 1,
- Fig. 3: eine weitere Ausführungsform eines Reibungsdämpfers in in eine Trommelwaschmaschine montiertem Zustand und
- Fig. 4: eine weitere abgewandelte Ausführungsform eines Reibungsdämpfers in einer Seitenansicht.

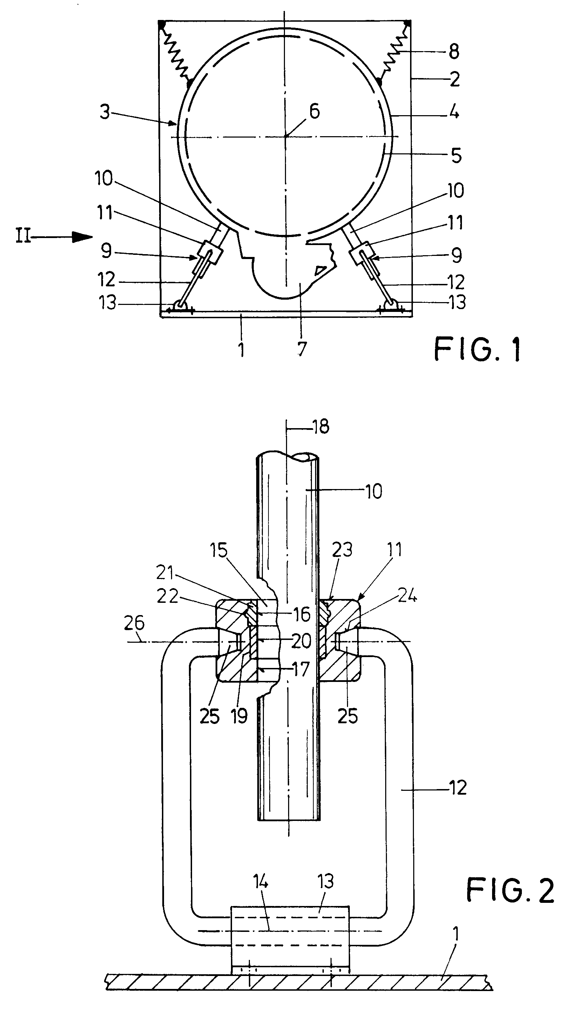

Die in Fig. 1 dargestellte Trommelwaschmaschine weist in üblicher Weise ein Gehäuse 2 mit einer Bodenplatte 1 auf. Im Gehäuse 2 ist ein Waschaggregat 3 angeordnet. Dieses besteht im wesentlichen aus einem Laugenbehälter 4, in dem eine Trommel 5 gelagert ist, die um eine horizontale Trommel-Achse 6 von einem Motor 7 drehantreibbar ist. Der Motor 7 ist ebenfalls am Laugenbehälter 4 angebracht. Das Waschaggregat 3 ist im wesentlichen frei schwingungsfähig mittels Schrauben-Zugfedern 8 am Gehäuse 2 aufgehängt. Etwa im Bereich seiner vertikalen, parallel zur Zeichnungsebene, also senkrecht zur Achse 6 verlaufenden Schwerpunktebene sind einerseits an der Bodenplatte 1 und andererseits am Laugenbehälter 4 angebrachte Reibungs-Dämpfer 9 vorgesehen. Jeder dieser in Fig. 2 detailliert dargestellten Reibungs-Dämpfer 9 weist ein in diesem Ausführungsbeispiel am Laugenbehälter 4 starr angebrachtes Reib-Rohr 10 auf, das durch eine Reibungsbüchse 11 hindurchgeführt ist. Die Reibungsbüchse 11 ist an einem Haltebügel 12 angebracht. Dieser Haltebügel 12 ist wiederum an der Bodenplatte 1 mittels einer Lager-Schelle 13 befestigt, wobei er um eine zur Trommel-Achse 6 parallele Schwenkachse 14 gegenüber der Bodenplatte 1 schwenkbar ist. Die Reibungsbüchse 11 weist eine das Reib-Rohr 10 aufnehmende Ausnehmung 15 auf. In den beiden Endbereichen dieser Ausnehmung 15 sind Führungsflächen 16, 17 ausgebildet, an denen das Reib-Rohr 10 geführt wird, so daß es sich in Richtung seiner Mittel-Längs-Achse 18 in der Ausnehmung 15 der Reibungsbüchse 11 geführt relativ zur Reibungsbüchse 11 verschieben bzw. bewegen kann. Zwischen den Führungsflächen 16, 17 ist eine Umfangsnut 19 in der Reibungsbüchse 11 ausgebildet, in der ein Reibbelag 20 angeordnet ist. Dieser weist entsprechend dem ringzylindrischen Verlauf der Umfangsnut 19 Ringzylinderform auf und kann aus einem in die Umfangsnut 19 eingelegten rechteckigen Streifen oder einer entsprechend geformten Hülse bestehen. Er besteht aus einem zelligen, nachgiebigen, also nicht starren Polyurethan und kann daher zumindest in seiner dem Reib-Rohr 10 zugewandten Reibfläche mit Fett imprägniert werden.

Eine Führungsfläche 16 ist an einem zylinderringförmigen Deckel 21 ausgebildet, mittels dessen die Umfangsnut 19 zu einer Seite hin begrenzt und verschlossen wird. Der Deckel 21 wird mittels mindestens eines Rastvorsprungs 22 in der Reibungsbüchse 11 elastisch eingerastet und gehalten. Mittels dieses Deckels 21 wird die Montage des Reibbelages 20 erleichtert, da vor dem Einsetzen des Deckels 21 die Umfangsnut 19 zu einer Seite der Ausnehmung 15 hin völlig offen liegt, so daß der Reibbelag 20 sehr einfach von der zugeordneten Stirnseite 23 der Reibungsbüchse 11 in die Umfangsnut 19 eingeschoben bzw. eingelegt werden kann.

Die Reibungsbüchse 11 weist zwei einander diametral gegenüberliegende, sich kegelstumpfförmig verjüngende Aufnahmen 24 auf, in die als Lagerzapfen 25 dienende einander gegenüberliegende freie Enden des Haltebügels 12 eingreifen. Hierdurch ist die Reibungsbüchse 11 gegenüber dem Haltebügel 12 nur um eine Lagerachse 26 schwenkbar, die parallel zur Schwenkachse 14 und damit parallel zur Trommel-Achse 6 verläuft. Der Haltebügel 12 ist in üblicher Weise aus einem Rundstab aus Stahl gebogen, bei dem es sich um normalen Baustahl und nicht um Federstahl handeln kann.

Bei Betrieb der Waschmaschine, und zwar insbesondere beim Durchlaufen der kritischen Drehzahl, wenn die Trommel 5 von einer niedrigen Waschdrehzahl auf eine hohe Schleuderdrehzahl beschleunigt wird, führt das Waschaggregat 3 durch Unwuchten bedingte Schwingungen im wesentlichen um die Trommel-Achse 6 aus. Diese Schwingungen werden durch die Reibungs-Dämpfer 9 gedämpft, da ein wesentlicher Teil der Schwingungsenergie aufgrund der Relativbewegung zwischen den Reib-Rohren 10 und dem jeweiligen Reibbelag 20 in Wärme umgewandelt wird. Die Dämpfung erfolgt aufgrund der sogenannten geschmierten Reibung sehr weich. Insbesondere an den Umkehrpunkten der jeweiligen Relativbewegungen zwischen Reib-Rohr 10 und Reibbelag 20, wo für eine kurze Zeit die Relativbewegung gleich Null ist, wo also ein Wechsel von der Gleitreibung zur Haftreibung erfolgt, tritt kein Rattern auf, da die Unterschiede zwischen Haftreibung und Gleitreibung sehr gering sind. Das Waschaggregat 3 führt also weichgedämpfte Schwingungen aus.

Obwohl die Reibungs-Dämpfer 9 um zwei Achsen, nämlich die Schwenkachsen 14 und die Lagerachsen 26 schwenkbar sind, ist die Führung des Waschaggregates 3 gegenüber den Reibungs-Dämpfern 9 definiert, da die Reib-Rohre 10 starr am Laugenbehälter 4 befestigt sind. Die Reibungs-Dämpfer 9 sind - wie Fig. 1 erkennen läßt - von der Bodenplatte 1 nach oben aufeinander zu geneigt.

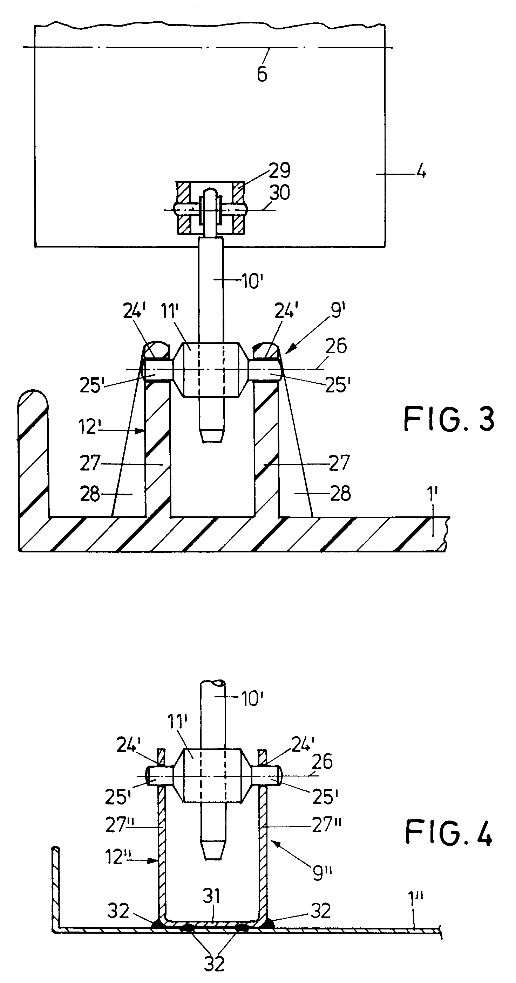

In Fig. 3 ist eine Ausführungsform dargestellt, bei der eine Bodenplatte 1' aus Kunststoff besteht und bei der ein Haltebügel 12' einstückig mit an die Bodenplatte 1' angegossen ist. In diesem Fall besteht der Haltebügel 12' im wesentlichen aus zwei von der Bodenplatte 1' nach oben ragenden, parallel zueinander verlaufenden Schenkeln 27, die jeweils mittels Rippen 28 gegenüber der Bodenplatte 1' ausgesteift sind. Die Reibungsbüchse 11' unterscheidet sich von der Reibungsbüchse 11 im wesentlichen dadurch, daß sie keine Aufnahmen für Lagerzapfen aufweist, sondern daß Lagerzapfen 25' an der Reibungsbüchse 11' ausgebildet sind, die in entsprechend angepaßte Aufnahmen 24' in den Schenkeln 27 des Haltebügels 12' eingreifen, so daß die Reibungsbüchse 11' mit einem Reib-Rohr 10' um die Lagerachse 26 schwenkbar ist.

Damit der Reibungs-Dämpfer 9' insgesamt zwischen Bodenplatte 1' und Laugenbehälter 4 zwei Schwenkachsen erhält, die notwendig sind, um eine Schwingung zu ermöglichen, sind die Reib-Rohre 10' mittels eines Schwenklagers 29 am Laugenbehälter 4 befestigt. Die Schwenkachse 30 des Schwenklagers 29 verläuft parallel zur Trommel-Achse 6 und zur Lagerachse 26. Soweit es nicht erneut beschrieben wurde, stimmt das Ausführungsbeispiel nach Fig. 3 mit dem nach den Fig. 1 und 2 überein.

In Fig. 4 ist ein drittes Ausführungsbeispiel dargestellt, das dem Ausführungsbeispiel nach Fig. 3 sehr ähnlich ist. Es unterscheidet sich von diesem dadurch, daß die Bodenplatte 1'' aus Blech besteht und daß der Haltebügel 12'' U-förmig ausgebildet ist, und zwar durch Biegen aus einem Blechstreifen, d.h. aus Bandmaterial. In seinen Schenkeln 27'' sind Aufnahmen 24'' ausgebildet, in die die Lagerzapfen 25' der Reibungsbüchse 11' eingreifen. Der die Schenkel 27'' verbindende Steg 31 des Haltebügels 12'' ist an der Grundplatte durch Schweißungen 32 befestigt.

Die Reibungsbüchse 11 bzw. 11' ist - abgesehen von ihrem Deckel 21 - einstückig ausgebildet. Sie kann aber auch in einer durch die Mittel-Längs-Achse 18 gehenden Ebene geteilt sein, wobei dann nach der Montage des Reibbelages 20 die beiden Hälften miteinander verrastet oder verschweißt werden. In diesem Fall wäre ein Deckel nicht erforderlich; der entsprechende Teil der Führungsfläche 16 könnte in diesem Fall auch mit jeder Hälfte der Reibungsbüchse einstückig ausgebildet sein.

Die Reibungs-Dämpfer 9, 9', 9'' können auch umgekehrt angeordnet sein, d.h. das jeweilige Reib-Rohr 10 bzw. 10' kann an der Bodenplatte 1, 1', 1'' befestigt oder angelenkt sein, während umgekehrt der Haltebügel 12, 12', 12'' am Laugenbehälter 4 angebracht bzw. angelenkt sein kann.

Die Montage der Reibungsbüchse 11' bei den Ausführungsbeispielen nach den Fig. 3 und 4 erfolgt unter elastischer Aufweitung der Schenkel 27 bzw. 27'' der Haltebügel 12', 12''.

Der Reibbelag 20 kann in seiner Reibfläche auch eine größere Ausnehmung aufweisen, die zur Aufnahme von Schmierstoff dient. Eine solche Ausnehmung kann beispielsweise dadurch gebildet werden, daß der Reibbelag durchtrennt ist und auch zwei mit einem Abstand zueinander angeordneten Teil-Reibbelägen besteht.

## Patentansprüche

1. Reibungsdämpfer für Waschmaschinen, die ein Gehäuse (2) mit Bodenplatte (1. 1', 1'') und ein schwingungsfähig im Gehäuse (2) angeordnetes Waschaggregat (3) aufweisen, das eine um eine Trommel-Achse (6) drehantreibbare Trommel (5) enthält,
- mit einem zylindrischen Reibkörper (Reib-Rohr 10, 10'),
- mit einem Haltebügel (12, 12', 12'') und
- mit einem am Haltebügel (12, 12', 12'') um eine zur Trommel-Achse (6) parallele Lagerachse (26) schwenkbar gelagerten Träger für einen am Reib-Rohr (10, 10') anliegenden Reibbelag (20),
dadurch gekennzeichnet, daß der Träger als geschlossene Reibungsbüchse (11, 11') ausgebildet ist, die das Reib-Rohr (10, 10') in einer Ausnehmung (15) geführt aufnimmt und die eine zum Reib-Rohr (10, 10') hin offene Umfangsnut (19) aufweist, in der der Reibbelag (20) angeordnet ist.

2. Reibungsdämpfer nach Anspruch 1, dadurch gekennzeichnet, daß die Umfangsnut (19) zu einer Stirnseite (23) der Reibungsbüchse (11, 11') durch einen Deckel (21) verschlossen ist.

3. Reibungsdämpfer nach Anspruch 2, dadurch gekennzeichnet, daß der Deckel (21) in der Reibungsbüchse (11, 11') durch eine Rastverbindung gehalten ist.

4. Reibungsdämpfer nach einem der Ansprüche 1 bis 3, dadurch gekennzeichnet, daß beiderseits der Umfangsnut (19) Führungsflächen (16, 17) für das Reib-Rohr (10, 10') ausgebildet sind.

5. Reibungsdämpfer nach den Ansprüchen 2 und 4, dadurch gekennzeichnet, daß eine Führungsfläche (16) an dem Deckel (21) ausgebildet ist.

6. Reibungsdämpfer nach einem der Ansprüche 1 bis 5, dadurch gekennzeichnet, daß der Reibbelag (20) aus einem zelligen Material, nämlich einem nachgiebigen geschäumten Polyurethan-Schaumstoff mit in der Reibfläche offenen Zellen besteht und daß zumindest in den offenen Zellen der Reibfläche Schmierstoff angeordnet ist.

7. Reibungsdämpfer nach einem der Ansprüche 1 bis 6, dadurch gekennzeichnet, daß der Haltebügel (12, 12', 12'') an der Bodenplatte (1, 1', 1'') oder dem Waschaggregat (3) und das Reib-Rohr (10, 10') entsprechend am Waschaggragat (3) oder der Bodenplatte (1, 1', 1'') befestigbar ist.

8. Reibungsdämpfer nach Anspruch 7, dadurch gekennzeichnet, daß der Haltebügel (12) oder das Reib-Rohr (10') um eine zur Trommel-Achse (6) parallele Schwenkachse (14, 30) befestigbar ist.

9. Reibungsdämpfer nach einem der Ansprüche 1 bis 8, dadurch gekennzeichnet, daß Bodenplatte (1') und Haltebügel (12') aus Kunststoff gegossen sind.

10. Reibungsdämpfer nach einem der Ansprüche 1 bis 9, dadurch gekennzeichnet, daß die Reibungsbüchse (11') mit Lagerzapfen (25') in Aufnahmen (24', 24'') des Haltebügels (12', 12'') eingreift.

11. Reibungsdämpfer nach einem der Ansprüche 1 bis 9, dadurch gekennzeichnet, daß der Reibbelag (20) in seiner Reibfläche eine Ausnehmung zur Aufnahme von Schmierstoff aufweist.
